# EUROPEAN PATENT APPLICATION

(11) **EP 1 908 572 A2**
(43) Date of publication of application: **09.04.2008**
(21) Application number: 07291064.9
(22) Date of filing: 04.09.2007
(51) Int. Cl.: B29C 49/54

(54) **Dynamic device and method for forming a blow-molded article**

(30) Priority: 03.10.2006 US 542472
(71) Applicant: Custom-Pak, Inc., Clinton, IA 52732 (US)
(72) Inventor: Koranda, Daniel E., Clinton, IA 52732 (US); Grinnall, Michael L., Clinton, IA 52732 (US)
(74) Representative: Sayettat, Julien Christian

(57) **Abstract**

An apparatus for forming a blow-molded article (200) including a mold assembly at least partially defining a mold surface (104) against which a blow-molded article (200) is conformed during blow molding, and at least one dynamic device (100) including an insert (110) at least partially defining the mold surface (104), the insert (110) movable from an extended position to a retracted position, wherein the insert (110) is maintained in the extended position during the blow molding and the insert (110) is moved to the retracted position following the blow molding to enable extraction of the article (200).

## Description

### FIELD OF THE INVENTION

The invention relates to blow-molded articles, and more particularly to a dynamic device and method for forming a blow-molded article.

### BACKGROUND OF THE INVENTION

The use of blow-molding as a method for manufacturing various sorts of articles is generally well known. Typically, this process involves the use of a mold consisting of two separate halves or portions having cavities of particularly desired shapes and sizes. Usually, one extrudes a large-diameter, sealed tube of molten material (commonly referred to as a "parison"), places the tube between the mold halves, and closes the mold around the tube. Fluid pressure is then introduced into the tube, forcing the molten tube against the walls of the cavities, conforming the tube to the shape thereof. The pressure is maintained until the molten material cools and solidifies. The pressure is then released, the mold halves are pulled apart, and the hardened article is ejected therefrom.

One such article commonly manufactured in this manner is double wall cases or chests. By producing cases in this manner, one is able to produce an article that is capable of carrying and protecting tools placed inside the case that has a multitude of desirable physical characteristics - such as rigidity, scuff resistance, and impact absorption - yet that is relatively inexpensive to manufacture. Typically, these cases will be formed using the process described above, where one mold half forms the exterior of both the base and lid portions of the case, while the other mold half forms the interior of both base and lid portions. Usually, the mold half forming the exterior of the case forms a wall with a smooth, attractive shape, while the mold half that forms the interior of the case is often molded with compartments to hold specific contents. Alternatively, the cases or chests may be manufactured from a plurality of generally flat panels, each panel formed using the above described process and subsequently joined together.

The use of latches is well known when connecting and holding blow-molded articles, such as cases or chests, which include two clamshell portions. Such articles are typically manufactured with substantially parallel planar surfaces at the latch connection. The latch attachment means for receiving a plastic or metal latch are generally aligned in the direction of mold open-close for easy molding and part extraction. Latch attachment means which are not aligned in the direction of the mold open-close cannot be normally extracted from the mold without deforming the article.

Therefore, the design of latch attachment features on blow-molded articles is limited. For example, many protrusions, recesses and undercuts cannot be formed perpendicular to the direction of the mold extraction as desired. This prevents the use of the most effective metal and plastic latch products that are currently available.

What is desired, therefore, is a means to form blow-molded articles having features with planar right angles and/or non-parallel orientation with respect to the direction of mold extraction.

### SUMMARY OF THE INVENTION

According, it is an object of the present invention to provide a mold assembly and method for forming complex features on blow-molded articles, such as features not aligned with the direction in which the article is extracted from its mold.

It is a further object to provide a mold assembly having one or more dynamic inserts for forming latch features on blow-molded articles such as chests and/or panel assemblies.

These and other objectives are achieved by providing an apparatus for forming a blow-molded article including a mold assembly at least partially defining a mold surface against which a blow-molded article is conformed during blow molding, and at least one dynamic device including an insert at least partially defining the mold surface, the insert movable from an extended position to a retracted position, wherein the insert is maintained in the extended position during the blow molding and the insert is moved to the retracted position following the blow molding to enable extraction of the article. In some embodiments, the insert forms at least one recess extending in a first direction into the blow-molded article, the first direction substantially non-parallel, and possibly perpendicular, to a second direction in which the article is extracted.

Further provided is an apparatus for forming a blow-molded article, including a mold assembly at least partially defining a mold surface against which a blow-molded article is conformed during blow molding, and at least one insert at least partially defining the mold surface for forming at least one latch feature on the blow-molded article, the insert movable from an extended position to a retracted position, wherein the insert is maintained in the extended position during formation of the blow molded article to form the at least one latch feature and the insert is moved to the retracted position following formation to enable extraction of the article. In some embodiments, the latch feature includes at least one undercut surface substantially perpendicular to a direction of ejection of the article from the mold assembly.

Further provided is a method for forming a latch mechanism on a blow-molded article including the steps of providing a mold assembly for forming a blow-molded article, the mold assembly including at least one insert movable along a first direction from an extended position to a retracted position for defining at least one latch feature in the article, maintaining the at least one insert in the extended position, inflating a parison inside the mold assembly, the parison conforming to the mold assembly including the at least one insert to form the article, cooling the article, moving the at least one insert to the retracted position, and removing the article from the mold assembly along a second direction.

Other objects, features and advantages according to the present invention will become apparent from the following detailed description of certain advantageous embodiments when read in conjunction with the accompanying drawings in which the same components are identified by the same reference numerals.

### BRIEF DESCRIPTION OF THE DRAWINGS

FIG. 1A is a perspective view of a device for forming a blow-molded article according to an exemplary embodiment of the present invention.

FIG. 1 B is a cutaway view of the device for forming a blow-molded article shown in FIG. 1A.

FIG. 2A is a perspective view of a blow-molded article formed using the device shown in FIG. 1.

FIG. 2B is another perspective view of the blow-molded article shown in FIG. 2A.

FIG. 3A is a cutaway view of the device for forming a blow-molded article shown in FIG. 1.

FIG. 3B is another cutaway view of the device for forming a blow-molded article shown in FIG. 1.

FIG. 4 illustrates an exemplary method of forming a blow-molded article according to an exemplary embodiment of the present invention.

### DETAILED DESCRIPTION OF THE INVENTION

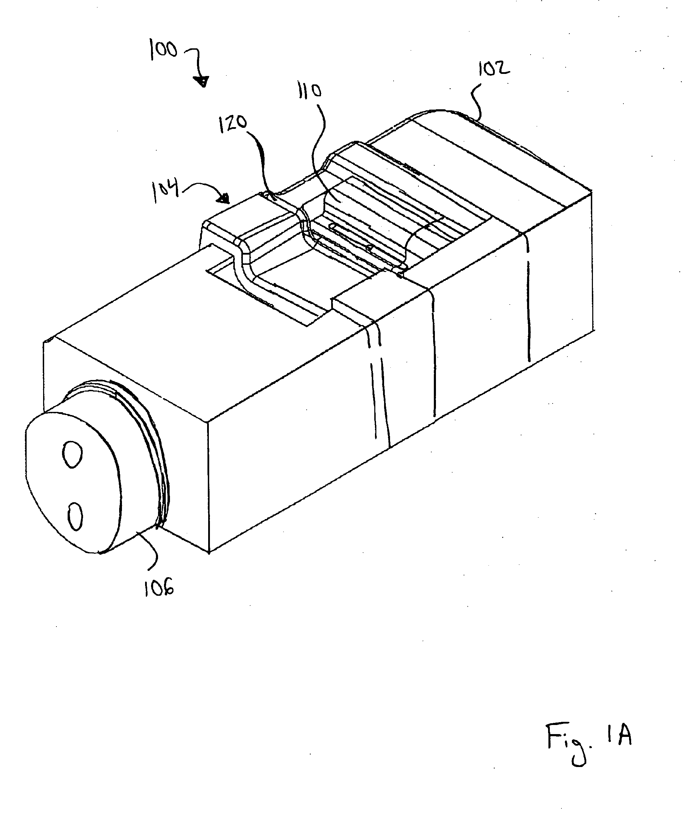

FIG. 1A shows a device 100 according to an exemplary embodiment of the present invention. The device 100, e.g., dynamic device, provides a means to create blow-molded articles, or portions thereof, having features not obtainable using static mold components. For example, the device 100 may be used for creating latch features on a case or panel assembly which are not aligned with the direction of the mold open/close. The device 100 may also used for any other complex features which are not aligned with the direction in which the article is ejected or extracted from its mold. The device 100 may be connected to or incorporated in a mold or mold assembly for manufacturing a blow-molded article or panel thereof. In some embodiments, the device 100 is a complete mold assembly and includes all mold surfaces necessary to form the blow-molded article or panel.

The exemplary device 100 includes a housing 102 manufactured from any suitable material, such as steel. The device 100 further includes a mold surface 104 including any number of elements for forming the blow-molded article and particular features thereon. The device 100 includes at least one movable insert 110 for forming a feature, such as a latch, on a blow-molded article. The insert 110 is movable from a first position to one or more second positions. In the present embodiment, the insert 110 is movable via a hydraulic cylinder 106. As explained in more detail below, the insert 110 may be moved to an extended position during a blow-molding process and moved to a retracted position to enable extraction or ejection of the blow-molded article from the device 100 and/or mold assembly. The device 100 may further include one or more packers 120 to push the plastic during the molding process and prevent blowouts or the development of weak spots in the article.

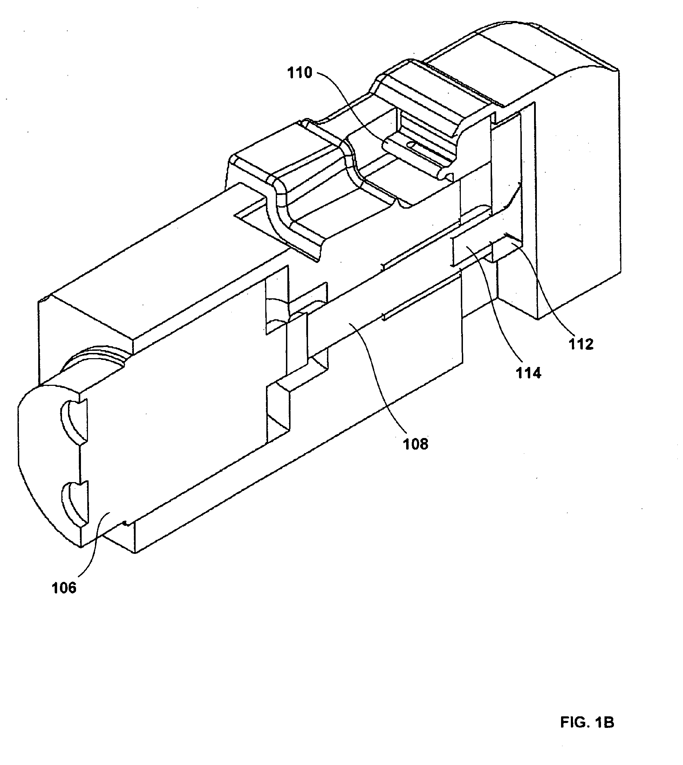

FIG. 1 B shows a cutaway view of the device 100. The exemplary device 100 includes the hydraulic cylinder 106 for actuating a stroke arm 112 via a rod 108 (e.g., ½" rod). The rod 108 may include any number of bushings as necessary. The rod 108 may be connected to the stroke arm 112 via one or more screws 114 (e.g., a 5/16-24 panhead socket head cap screw). The stroke arm 112 is connected to the insert 110, either removably or fixedly. In some embodiments, the insert 110 is removably connected to enable easy replacement of the insert 110, e.g., for manufacturing different types of blow-molded articles and features.

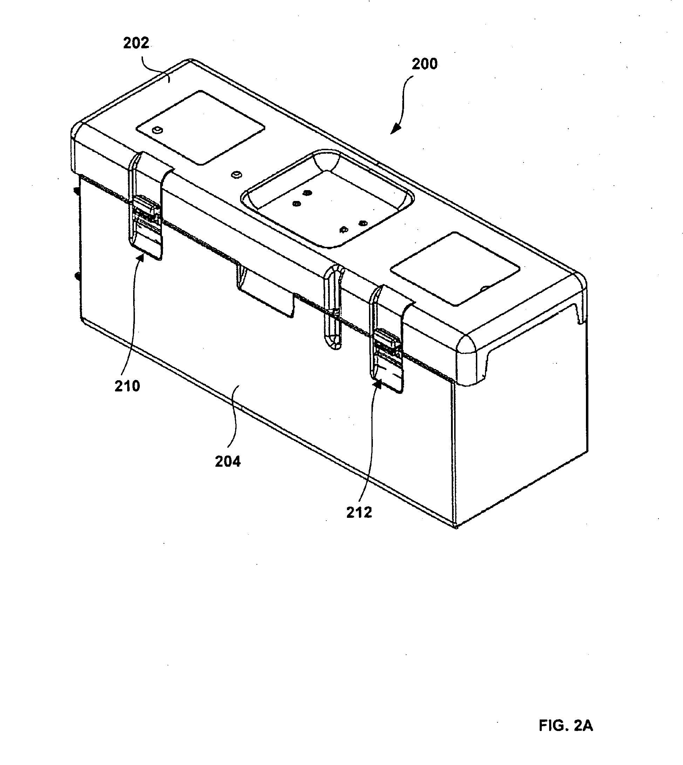

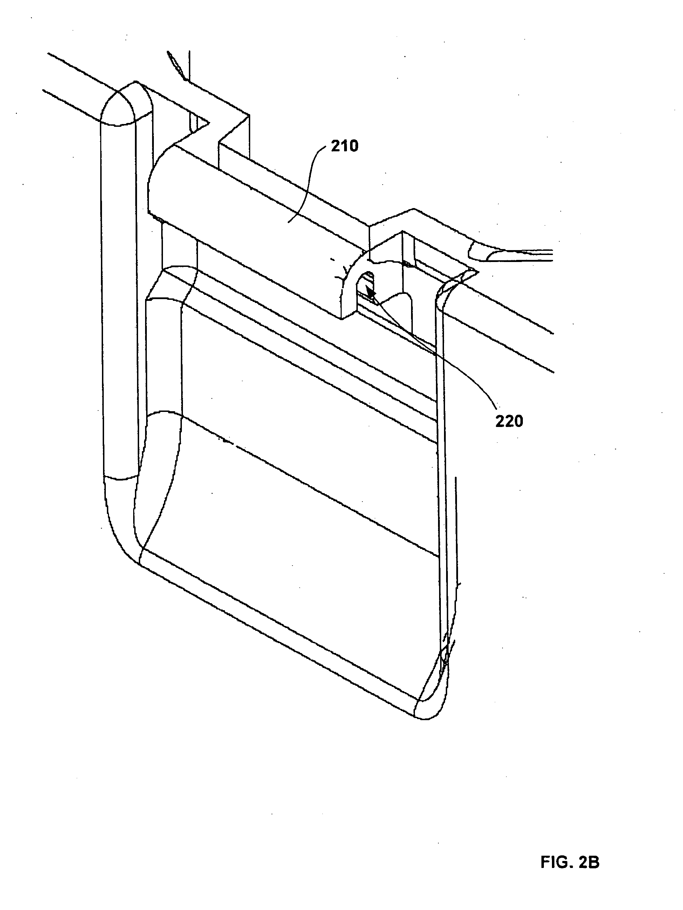

FIGS. 2A and 2B shown one exemplary blow-molded article 200 which may be manufactured using the device 100. The exemplary article 200 is a chest comprising a plurality of blow-molded panels, e.g., panels 202/204. The article 200 includes two latch attachments 210/212 for receiving latch mechanisms, such as metal toggle latches, or any other latch mechanisms for securing the chest. The latch attachments 210/212, also shown in FIG. 2B, may include one or more recessed portions (e.g., undercuts) or features 220. As one of the ordinary skill in the art will understand, the recessed feature 220, and/or surfaces thereof, is not aligned with the direction by which the panel 204 would normally be extracted from its mold. In the present example, the feature 220 is substantially perpendicular, or at least non-parallel, to the direction of extraction.

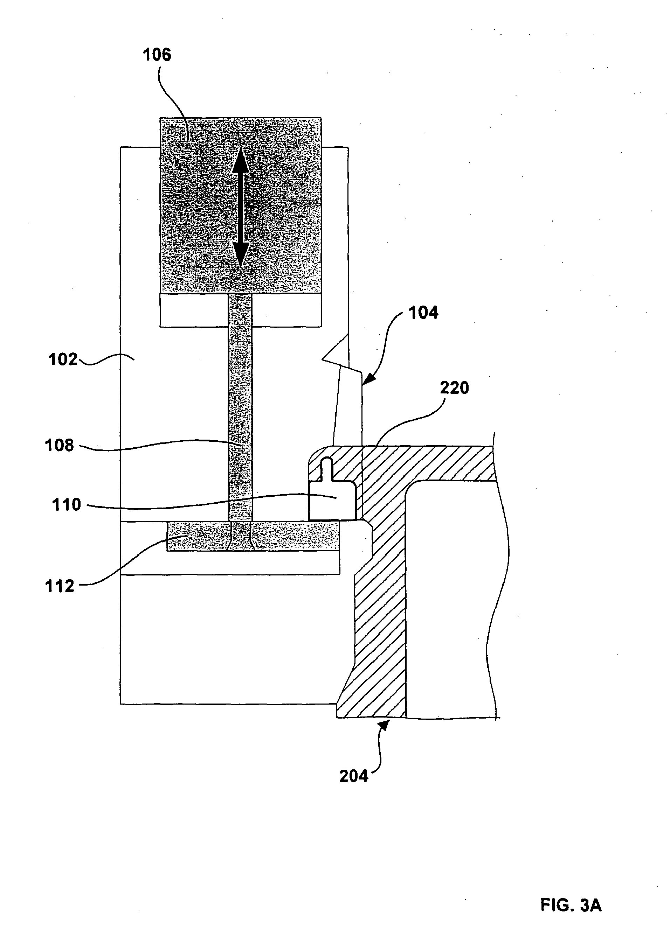

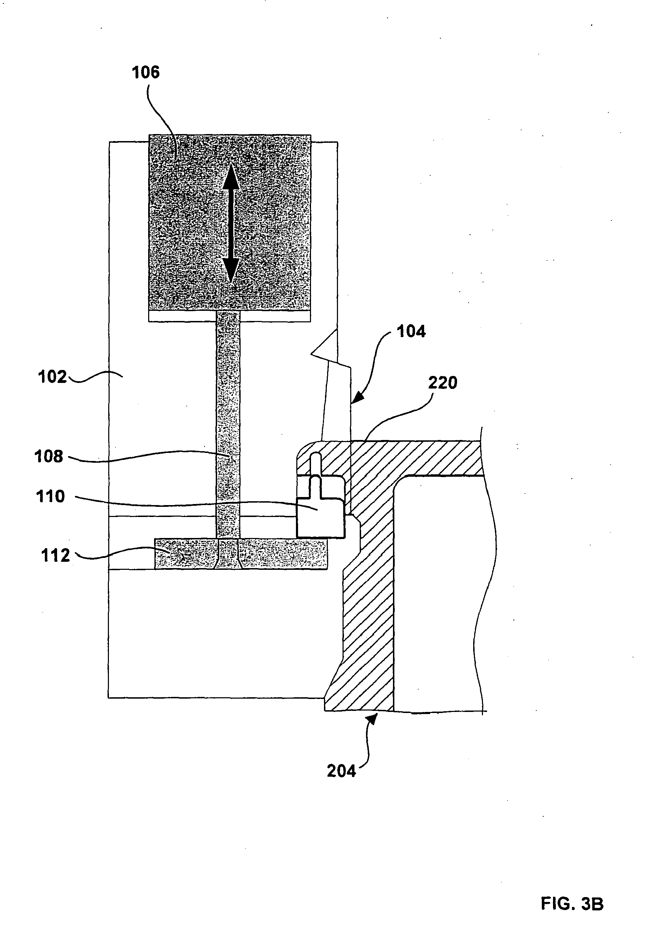

FIGS. 3A and 3B show cutaway views of the device 100 and a portion of the blow-molded article 200. In operation, the insert 110 of the device 100 is maintained or moved to an extended position, e.g., by actuating the cylinder 106. A molten plastic parison is then inflated (e.g., with air or fluid pressure) inside a mold assembly and against the surface 104 of the device 100. The parison is conformed to the surface 104, and/or other surfaces of the mold assembly, to form a blow-molded article or a panel of a blow-molded article. As shown, the insert 110 extends in a direction substantially parallel to the surface 104. After the molten plastic is cooled below the plastic softening point, the insert 110 is moved to a retracted position to enable extraction or ejection of the blow-molded article as shown in FIG. 3B. The blow-molded article may then be ejected with the desired feature. In the present example, a latch attachment feature 210/212 is provided.

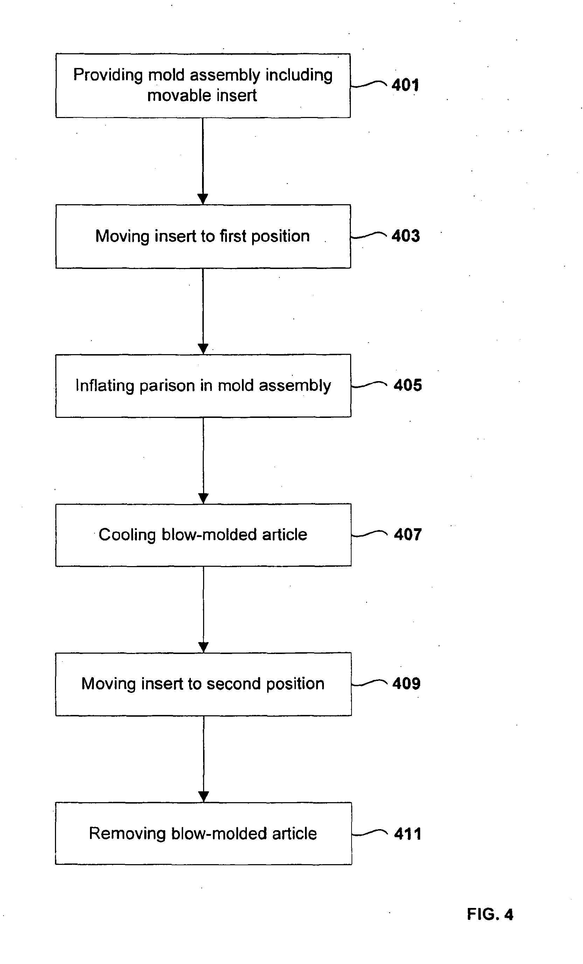

FIG. 4 shows an exemplary method of forming a latch mechanism on a blow-molded article employable by the device 100 and/or insert 110. The method includes providing a mold assembly including at least one insert movable in a first direction from an extended position to a retracted position (step 401). The mold assembly may, e.g., include one or more mold halves having mold surfaces for forming a particular blow-molded article or portion thereof. The mold assembly may further incorporate or be connected to a device 100 according to an exemplary embodiment of the present invention. The insert is moved to and/or maintained in the first position while a parison is inflated inside the mold assembly (steps 403-405). The parison is conformed to the mold assembly (e.g., via air or fluid pressure) including the at least one insert to form an article. The article is then cooled to maintain its desired shape and the at least one insert is moved to the retracted position (steps 407 - 409). The article may then be removed or ejected from the mold assembly along a second direction (step 411). In some embodiments, the insert forms at least one recess extending in the first direction non-parallel to the second direction into the blow-molded article. Following ejection of the article, the insert may be returned to the first position for formation of the next part.

Although the invention has been described with reference to a particular arrangement of parts, features and the like, these are not intended to exhaust all possible arrangements or features, and indeed many modifications and variations will be ascertainable to those of skill in the art.

## Claims

1. An apparatus for forming a blow-molded article (200), comprising:
a mold assembly at least partially defining a mold surface (104) against which a blow-molded article (200) is conformed during blow molding; and
at least one dynamic device (100) comprising an insert (110) at least partially defining the mold surface (104), the insert (110) movable from an extended position to a retracted position,
wherein said insert (110) is maintained in the extended position during the blow molding and said insert (110) is moved to the retracted position following the blow molding to enable extraction of the article.

2. The apparatus according to claim 1, wherein the insert (110) forms at least one recess extending in a first direction into the blow-molded article (200), the first direction substantially non-parallel to a second direction in which the article is extracted.

3. The apparatus according to claim 2, wherein the first direction is substantially perpendicular to the second direction.

4. The apparatus according to claim 2, wherein the at least one recess includes at least one article surface interlocking the insert (110) and blow-molded article (200) when the insert (110) is in the extended position.

5. The appartus according to claim 1, wherein said dynamic device (100) further comprises a rod (108) and a hydraulic cylinder (106) for moving the insert (110).

6. The apparatus according to claim 5, wherein the at least one dynamic device (100) includes a housing (102) comprising the insert (110), the rod (108) and the hydraulic cylinder (106).

7. The apparatus according to claim 1, further comprising:
a hydraulic actuator for moving the insert (110).

8. The appartus according to claim 1, wherein the insert (110) is a latch forming insert.

9. The appartus according to claim 1, wherein the insert (110) is movable in a direction substantially parallel to the mold surface (104).

10. The apparatus according to claim 1, wherein said mold assembly includes the at least one device (100).

11. The apparatus according to claim 1, further comprising:
a second dynamic device (100) comprising a second insert (110) at least partially defining the mold surface (104), the second insert (110) movable from a second extended position to a second retracted position.

12. An apparatus for forming a blow-molded article (200), comprising:
a mold assembly at least partially defining a mold surface (104) against which a blow-molded article (200) is conformed during blow molding; and
at least one insert (110) at least partially defining the mold surface (104) for forming at least one latch feature on the blow-molded article (200), said insert (110) movable from an extended position to a retracted position,
wherein said insert (110) is maintained in the extended position during formation of the blow molded article (200) to form the at least one latch feature (220) and said insert (110) is moved to the retracted position following formation to enable ejection of the article from said mold assembly.

13. The apparatus according to claim 12, wherein the at least one latch feature (220) includes at least one undercut surface substantially perpendicular to a direction of ejection of the article.

14. The apparatus according to claim 12, wherein the at least one latch feature (220) receives a latch mechanism.

15. The apparatus according to claim 12, wherein the blow-molded article (200) is a chest.

16. The appartus according to claim 12, further comprising:
an insert housing (102), wherein said insert housing (102) includes said at least one insert (110) and an actuator mechanism for moving the insert (110).

17. The apparatus according to claim 16, wherein the actuator mechanism is a hydraulic actuator mechanism comprising a hydraulic cylinder (106) and a rod (108).

18. A method for forming a latch mechanism on a blow-molded article (200), comprising the steps of:
providing a mold assembly for forming a blow-molded article (200), the mold assembly including at least one insert (110) movable along a first direction from an extended position to a retracted position for defining at least one latch feature (220) in the article;
maintaining the at least one insert (110) in the extended position;
inflating a parison inside the mold assembly, the parison conforming to the mold assembly including the at least one insert (110) to form the article;
cooling the article;
moving the at least one insert (110) to the retracted position; and
removing the article from the mold assembly along a second direction.

19. The method according to claim 18, wherein the latch feature (220) includes at least one recess extending in the first direction into the blow-molded article (200), the first direction substantially non-parallel to second direction in which the article is removed.

20. The method according to claim 18, wherein the first direction is substantially perpendicular to the first direction.

21. The method according to claim 18, wherein the at least one insert (110) is moved to the retracted position via a hydraulic actuator.
